# EUROPEAN PATENT APPLICATION

(11) **EP 1 551 174 A2**
(43) Date of publication of application: **06.07.2005**
(21) Application number: 04078562.8
(22) Date of filing: 30.12.2004
(51) Int. Cl.: H04N 5/232

(54) **Image processing apparatus and method**

(30) Priority: 02.01.2004 KR 2004000008
(71) Applicant: LG Electronics Inc., Seoul 150-875 (KR)
(72) Inventor: Byun, Seong Chan, Mapo-gu Seoul (KR); Choi, In Sik, Seocho-gu Seoul (KR)
(74) Representative: Bergquist, Kjell Gunnar

(57) **Abstract**

An image processing apparatus and method is provided. When a selected image out of a captured image cannot be stored or displayed at a designated zoom scale factor, the image processing apparatus enlarges the selected image into a desired size by using a pixel interpolation technique.

## Description

### BACKGROUND OF THE INVENTION

### Field of the Invention

The present invention relates to an image processing device, and particularly, to an image processing apparatus and method capable of obtaining a high-magnification image by using an improved zoom scale factor even when the pixel number of an image pickup sensor is small, and more particularly, to an image processing apparatus and method capable of increasing a zoom scale factor for an image taken in a digital image device.

### Description of the Related Art

Recently, with an increase in demand for a digital image processing device such as a digital camcorder and a camera phone, its functions become more and more diversified. Of such functions, a digital zoom function is especially useful, and users want a portable digital image processing device capable of supporting a higher digital zoom scale factor.

When adopting an image pickup sensor of 3 hundred thousands pixels, the prior art image processing device does not support a zoom function for a 640×480 pixel screen, or decreases a size of a stored image to 320×240 pixels even though it supports a zoom function. Also, in the same condition, the prior art image processing device supports a 2× zoom function for a 320×240 pixel screen, and decreases a stored image size to 160x120 pixels when a 4× zoom function is executed.

That is, in general, the prior art image processing device performs a zoom function in such a way that it extracts only desired image data from captured image data that is received from a image pickup sensor. Accordingly, the prior art image processing device can support a zoom scale factor only about up to a LCD screen size in a preview mode.

In detail, a zoom function of the prior art image processing device enables a zoom function requested by a user if it is possible to make an image of a LCD screen size by covering the image data with a window fitting with a zoom scale factor inputted by the user. However, if an image size selected according to the inputted zoom scale factor is below the LCD screen size, it is impossible to enlarge an image the zoom scale factor. Also, although possible, an image is stored with its size being decreased.

For example, in case where an image processing device adopts an image pickup sensor of 3 hundred thousands pixels and an LCD display of 160×120 pixels, the image processing device can support up to a 4× zoom function when an image of 160×120 pixels is captured. That is, in case where an image pickup sensor of 3 hundred thousands pixels is used, a size of the smallest window coverable on an image of 640×480 pixels becomes identical to an LCD screen size.

As above, the prior art image processing device can support a zoom scale factor only up to a display screen size, considering the pixel number of an image pickup sensor and the pixel number of a display unit. Also, in the prior art image processing, a stored image size is undesirable decreased if a requested zoom scale factor is above a zoom scale factor producible by a display unit.

### SUMMARY OF THE INVENTION

Accordingly, the present invention is directed to an image processing apparatus and method that substantially obviates one or more problems due to limitations and disadvantages of the related art.

An object of the present invention is to provide an image processing apparatus and method capable of supporting even a zoom scale factor formerly unsupportable due to restrictions in an image pickup sensor and a display device.

Another object of the present invention is to provide an image processing apparatus and method capable of preventing a size of an image from being reduced when the image is stored in a digital display device, thereby improving users' convenience.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an image processing apparatus includes: an image capturing unit for capturing an image; an image selector for selecting an image out of the captured image according to a zoom scale factor; an image enlarging unit for enlarging the selected image with a pixel interpolation technique; and an image display unit for displaying the enlarged image in a preview mode.

In another aspect of the present invention, an image processing method includes the steps of: designating a storage image size and a zoom scale factor based on a captured image in a storage mode; determining whether or not an image can be stored at the storage image size; selecting an image corresponding to the designated zoom scale factor from the captured image if an image cannot be stored at the storage image size; and enlarging the selected image into the storage image size by using a pixel interpolation technique and then storing the enlarged image.

In further another aspect of the present invention, an image processing method includes the steps of: determining based on a captured image whether or not a zoom scale factor is supported in a preview mode; selecting an image corresponding to an inputted zoom scale factor out of the captured image if the zoom scale factor is not supported; and enlarging the selected image into a display screen size by using a pixel interpolation technique and then displaying the enlarged image.

Accordingly, the present invention makes it possible to freely use a zoom function of a digital image device regardless of a restriction in a zoom scale factor.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of an image processing apparatus according to an embodiment of the present invention;

Fig. 2 is a flow diagram illustrating an image processing method for enlarging a zoom scale factor in a preview mode according to an embodiment of the present invention; and

Fig. 3 is a flow diagram illustrating an image processing method for enlarging a zoom scale factor in a storage mode according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

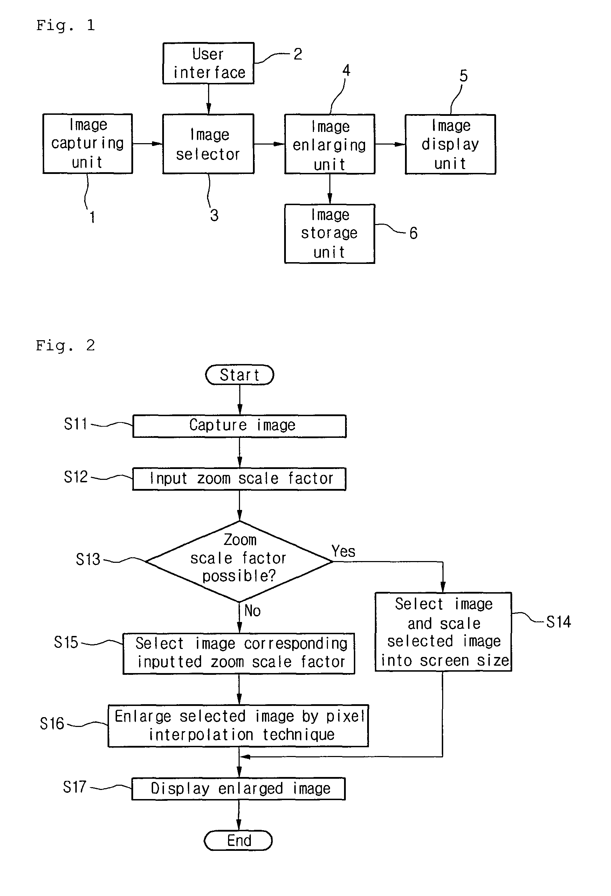

Fig. 1 is a block diagram of an image processing apparatus according to an embodiment of the present invention.

Referring to Fig. 1, the image processing apparatus is constructed to include an image capturing unit 1 for capturing an image, an image selector 3 for selecting a desired image from the captured image, an image enlarging unit 4 for enlarging the selected image by using a pixel interpolation technique, an image display unit 5 for displaying the enlarged image in a preview mode, and an image storage unit 6 for storing the enlarged image in a storage mode.

Also, the image processing apparatus may further include a user interface 2 for receiving zoom scale factor information and storage image size information from a user.

In detail, the image capturing unit 1 is constructed to include a lens, a filter, and an image pickup sensor, such as a charge coupled device (CCD) sensor and a complementary metal oxide semiconductor (CMOS) sensor, thereby capturing an image of an object or a scene.

The image selector 3 selects a given image from the captured image received from the image acquisition unit 1, by using a window corresponding to a zoom scale factor inputted by the user. Here, the window's position and the zoom scale factor can be designated by using the user interface 2. Also, by using the user interface 2, it can be determined whether the captured image is processed in a preview mode or in a storage mode.

At this time, the image selector 3 selects a given image from the captured image differently according to a preview mode or a storage mode. In detail, in case of a preview mode, the image selector 3 determines whether or not a zoom scale factor can be supported by a window corresponding to the inputted zoom scale factor, and then selects a given image according to the determination results. On the contrary, in case of a storage mode, the image selector 3 determines whether or not an image can be enlarged and stored at the inputted zoom scale factor/storage image size, and then selects a given image according to the determination results.

The image enlarging unit 4 receives the selected image from the image selector 3 and then enlarges the selected image into a given image size by using a pixel interpolation technique. For example, by using the pixel interpolation technique, the image enlarging unit 4 may enlarge the selected image into a screen size in a preview mode, or into the designated zoom scale factor/storage image size in a storage mode. Here, the pixel interpolation technique may be one of nearest neighbor interpolation, bilinear interpolation, bicubic interpolation, spline interpolation, and hybrid interpolation.

However, the image enlarging unit 4 may perform an enlargement operation only when the selected image needs to be enlarged.

The image display unit 5 receives an enlarged image from the image enlarging unit 4 and displays the enlarged image on a screen in a preview mode. Also, the image storage unit 6 receives an enlarged image from the image enlarging unit 4 and stores the enlarged image in a storage mode.

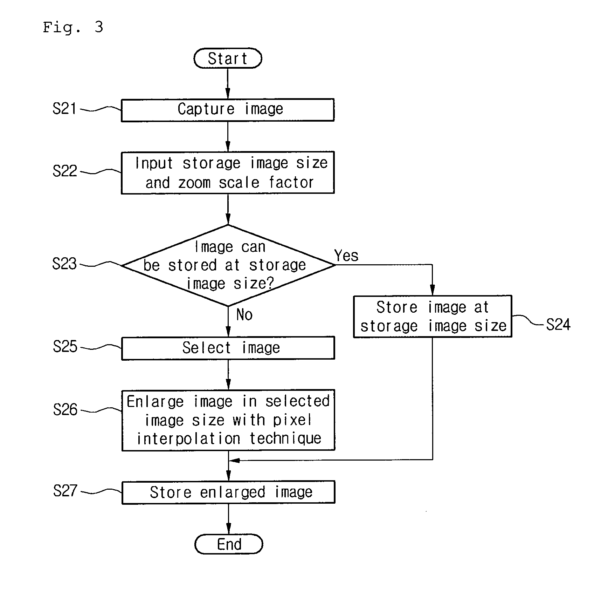

A method for enlarging a zoom scale factor in a preview mode or in a storage mode will now be described in detail with reference to Figs. 2 and 3.

Fig. 2 is a flow diagram illustrating an image processing method for enlarging a zoom scale factor in a preview mode according to an embodiment of the present invention.

Referring to Fig. 2, a given image is firstly captured from an object or a scene (S11). Thereafter, a desired zoom scale factor is inputted by a user (S12). Here, the zoom factor may also be inputted in advance by the user.

Then, it is determined whether or not the inputted zoom scale factor can be supported by a window (S13).

Here, the determination can be made by comparing a display screen size with an image size of a window selected according to the inputted zoom scale factor. For example, if the selected window size is above the display screen size, the zoom scale factor can be supported. In this case, the selected window size is scaled into the display screen size according to the zoom scale factor.

Otherwise, if the selected window size is below the display screen size, the zoom scale factor cannot be supported by the prior art.

Accordingly, the present invention proposes a new method for solving the above problem of the prior art.

If the inputted zoom scale factor can be supported by the selected window, an image corresponding to the window is selected from the captured image of an image pickup sensor and the selected image is scaled into the display screen size to then be displayed (S14).

Otherwise, if the inputted zoom scale factor cannot be supported by the selected window, an image corresponding to the inputted zoom scale factor is selected from the captured image of the image pickup sensor (S15). That is, if the inputted zoom scale factor cannot be supported by the selected window, an image cannot be displayed by a window as in the prior art. Accordingly, in this case, the selected image is enlarged by using the pixel interpolation technique.

If a desired image is selected in the step S15, the selected image is enlarged into the display screen size by using the pixel interpolation technique (S16). At this time, the pixel interpolation technique may be one of nearest neighbor interpolation, bilinear interpolation, bicubic interpolation, spline interpolation, and hybrid interpolation. The pixel interpolation is a well-known art, and therefore will not be described for simplicity.

Lastly, the enlarged image is displayed on the display screen (S17).

Consequently, the present invention makes it possible to enlarge the selected image with the interpolation technique when a zoom scale factor requested in a preview mode cannot be supported by the window, and to thereby support even a zoom scale factor that is not supported by the prior art. Accordingly, the present invention makes it possible to enlarge a possible range of a zoom scale factor regardless of the pixel number of the image pickup sensor and the pixel number of the display unit.

Fig. 3 is a flow diagram illustrating an image processing method for enlarging a zoom scale factor in a storage mode according to another embodiment of the present invention.

Referring to Fig. 3, a given image is firstly captured by the image pickup sensor (S21). Thereafter, a designated storage image size and a designated zoom scale factor are inputted by a user (S22).

Here, the storage image size means a size of an image that the user wants to store. At this time, it is determined whether or not an image can be stored at the inputted storage image size (S23).

Here, the determination can be made by comparing the storage image size with a size of an image selected from the captured image according to the inputted zoom scale factor. For example, if the selected image size is above the storage image size, the selected image can be stored at the storage image size according to the inputted zoom scale factor. Otherwise, if the selected image size is below the storage image size, the prior art cannot store the selected image at the storage image size but stores the selected image as it is.

Accordingly, the present invention proposes a new method for solving the above problem of the prior art.

If an image can be stored at the designated storage image size, an desired image corresponding to the designated zoom scale factor is selected from the captured image and the selected image is scaled into the storage image size to then be stored (S24).

Otherwise, if an image cannot be stored at the designated storage image size, an image corresponding to the designated zoom scale factor is selected from the captured image (S25). That is, if the selected image size is below the inputted storage image size, the selected image is enlarged by using the pixel interpolation technique.

In other words, if the selected image size is below the inputted storage image size, the selected image is enlarged into the storage image size by using the pixel interpolation technique (S26).

At this time, the pixel interpolation technique may be one of nearest neighbor interpolation, bilinear interpolation, bicubic interpolation, spline interpolation, and hybrid interpolation.

Lastly, the enlarged image is stored in a memory (S27).

As stated above, the present invention makes it possible to clearly enlarge an image into a display screen size corresponding to a designated zoom scale factor even when a zoom scale factor unsupportable due to a relational restriction between the pixel number of an image pickup sensor and the pixel number of a display unit is inputted in a preview mode, thereby improving users' convenience.

Also, the present invention makes it possible to enlarge a selected image into a desired image size when an image smaller than an image size requested by a user is selected due to a restriction in the pixel number of an image pickup sensor in a storage mode, and to thereby accurately store an image at the requested image size.

Consequently, the present invention makes it possible to more widely use a zoom scale factor in a preview mode or a storage mode of a digital image device by using the pixel interpolation technique.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image processing apparatus comprising:
an image capturing unit for capturing an image;
an image selector for selecting an image out of the captured image according to a zoom scale factor; and
an image enlarging unit for enlarging the selected image with a pixel interpolation technique.

2. The apparatus according to claim 1, further an image display unit for displaying the enlarged image in a preview mode

3. The apparatus according to claim 1, further comprising an image storage unit for storing the enlarged image in a storage mode.

4. The apparatus according to one of claims 1 through 3, wherein the image capturing unit comprises a lens, a filter and an image pickup sensor.

5. The apparatus according to one of claims 1 through 3, wherein at least the image enlarging unit is built in a camera phone, a digital camera, a digital camcorder, a personal portable terminal or a smart phone.

6. The apparatus according to claim 1, wherein the image enlarging unit performs the pixel interpolation technique when the selected image cannot be enlarged according to the zoom scale factor.

7. An image processing method comprising the steps of:
determining whether or not a zoom scale factor designated for a captured image is supported;
selecting an image corresponding to an inputted zoom scale factor out of the captured image if the zoom scale factor is not supported; and
enlarging the selected image by using a pixel interpolation technique.

8. The method according to claim 7, wherein the determination step is performed by comparing a display screen size with an image size selected according to the inputted zoom scale factor in a preview mode.

9. The method according to claim 7, wherein a zoom scheme by a window is applied if the zoom scale factor is supported.

10. The method according to claim 7, wherein a storage image size together with the zoom scale factor is designated.

11. The method according to claim 10, wherein the determination step is performed by comparing the storage image size with an image size selected according to the zoom scale factor.

12. The method according to claim 7, further including a step of storing an image, wherein the size of an image selected according to the zoom scale factor is stored as a storage image size if the zoom scale factor is supported.

13. The method according to one of claims 7 through 12, wherein the captured image is a still image or a moving image.

14. The method according to one of claims 7 through 12, wherein the pixel interpolation technique is one of a nearest neighbor interpolation technique, a bilinear interpolation technique, a bicubic interpolation technique, a spline interpolation technique, and a hybrid interpolation technique.

15. The apparatus according to one of claims 7 through 12, wherein the zoom scale factor is designated by a user.
